# EUROPEAN PATENT APPLICATION

(11) **EP 4 606 806 A1**
(43) Date of publication of application: **27.08.2025**
(21) Application number: 24760478.8
(22) Date of filing: 15.01.2024
(51) Int. Cl.: C07F 7/00, C07F 7/28, B01J 31/18, B01J 31/22, B01J 31/14, C08F 4/64, C08F 4/659

(54) **TRANSITION METAL COMPOUND AND CATALYST COMPOSITION COMPRISING THE SAME**

(30) Priority: 21.02.2023 KR 20230022825
(71) Applicant: LG CHEM, LTD., Seoul 07336 (KR)
(72) Inventor: CHO, Seong Mi, Daejeon 34122 (KR); PARK, Geun Ho, Daejeon 34122 (KR); PARK, Cheol Woong, Daejeon 34122 (KR); HAN, Ki Won, Daejeon 34122 (KR); LEE, Yun Jin, Daejeon 34122 (KR); LEE, Jong Chul, Daejeon 34122 (KR)
(74) Representative: Hoffmann Eitle
(86) International application number: PCT/KR2024/000702
(87) International publication number: WO 2024/177286

(57) **Abstract**

The present invention relates to a transition metal compound having a novel structure and a catalyst composition comprising the same.

## Description

### TECHNICAL FIELD

### Cross-reference to Related Applications

This application claims the benefit of Korean Patent Application No. 10-2023-0022825, filed on February 21, 2023, in the Korean Intellectual Property Office, the contents of which are incorporated herein by reference.

### Technical Field

The present invention relates to a transition metal compound having a novel structure and a catalyst composition comprising the same.

### BACKGROUND ART

Generally, olefin polymers such as an ethylene copolymer are useful polymer materials as the material for hollow molded product, an extrusion molded product, a film, a sheet or the like, and have been prepared in the presence of a Ziegler-Natta catalyst system.

The Ziegler-Natta catalyst is a heterogeneous catalyst and is a catalyst used in a system in which the phase of a reactant and the phase of a catalyst are not the same, for example, a system of liquid reactant-solid catalyst or the like. Such a Ziegler-Natta catalyst is composed of two components and is generally composed of a halogen compound of a transition metal including titanium (Ti), vanadium (V), chromium (Cr), molybdenum (Mo) and zirconium (Zr), (for example, TiCl₄), alkyllithium, alkylaluminum or the like.

However, the Ziegler-Natta catalyst has the concentration of active species of a few % to tens of % with respect to a transition metal atom, and most transition metal atoms may not demonstrate their function and have defects of not overcoming the limitations as a heterogeneous catalyst.

Recently, as a next generation catalyst which may overcome the defects, metallocene compounds have received the attention. The metallocene compounds are homogeneous catalysts including a metal in group 4 and are known to show desirable polymerization activity in olefin polymerization.

Most metallocene catalysts used for polymerization include a metal element in group 4 such as titanium, zirconium, and hafnium (Hf) and a supporting ligand, as a precursor, and are composed of two aromatic five-member rings and two halogen compounds which are leaving groups. Among them, an aromatic cyclopentadienyl group is generally used as the supporting ligand which is coordinated with respect to a central metal.

Such a metallocene catalyst is used in a variety of applications including an olefin polymerization process, but the catalyst activity showed some limitations (particularly in a solution process at temperature conditions of 100°C or higher), and it is known that, for example, due to relatively rapid terminal termination reaction (or chain transfer reaction) such as beta-hydride elimination reaction, an olefin polymer with a low molecular weight showing a molecular weight (Mn) of 20,000 or less at a temperature of 100°C or higher may be prepared. In addition, the active species of the metallocene catalyst is known to be deactivated at a temperature of 100°C or higher. Accordingly, in order to increase the applicability of the metallocene catalyst, methods for overcoming the above-mentioned limitations are necessary.

### DETAILED DESCRIPTION OF THE INVENTION

### TECHNICAL PROBLEM

An object of the present invention is to provide a novel transition metal compound which shows excellent copolymerization properties and is capable of preparing an olefin-based polymer, particularly, an olefin-based polymer having a high melting temperature and a high molecular weight, and a catalyst composition comprising the same.

### TECHNICAL SOLUTION

To solve the above tasks, the present invention provides a transition metal compound, a catalyst composition and a method for preparing an olefin polymer.
(1) The present invention provides a transition metal compound represented by Formula 1.

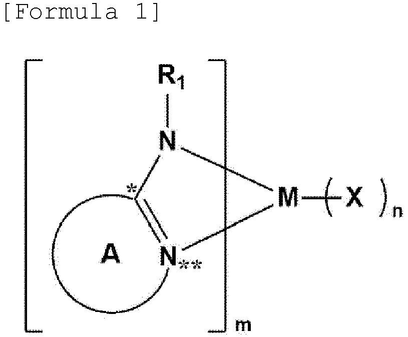

   In Formula 1,
   M is Ti, Zr or Hf,
   R₁ is an alkyl group of 1 to 20 carbon atoms or a cycloalkyl group of 5 to 20 carbon atoms,
   ring A is 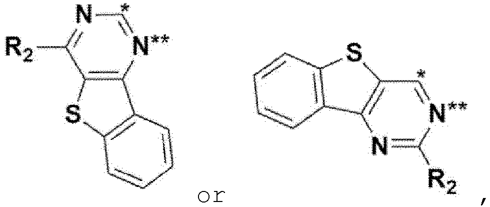 where R₂ is a substituted or unsubstituted aryl group of 6 to 30 carbon atoms or a substituted or unsubstituted heteroaryl group of 2 to 30 carbon atoms, and if R₂ is substituted, R₂ is substituted with an alkyl group of 1 to 20 carbon atoms or a cycloalkyl group of 5 to 20 carbon atoms,
   m is 1 and n is 3, or m is 2 and n is 2, and
   each X is independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms.
(2) The present invention provides the transition metal compound according to (1), wherein M is Hf, R₁ is an alkyl group of 1 to 15 carbon atoms, R₂ is a substituted or unsubstituted aryl group of 6 to 20 carbon atoms or a substituted or unsubstituted heteroaryl group of 2 to 20 carbon atoms, where if R₂ is substituted, R₂ is substituted with an alkyl group of 1 to 15 carbon atoms, m is 1, and n is 3.
(3) The present invention provides the transition metal compound according to (1) or (2), wherein M is Hf, R₁ is an alkyl group of 1 to 15 carbon atoms, R₂ is a substituted or unsubstituted aryl group of 6 to 20 carbon atoms or a substituted or unsubstituted heteroaryl group of 2 to 20 carbon atoms, where if R₂ is substituted, R₂ is substituted with an alkyl group of 1 to 15 carbon atoms, m is 2, and n is 2.
(4) The present invention provides the transition metal compound according to any one among (1) to (3), wherein the transition metal compound represented by Formula 1 is one selected from the group consisting of Formula 1-1 to Formula 1-4 below. 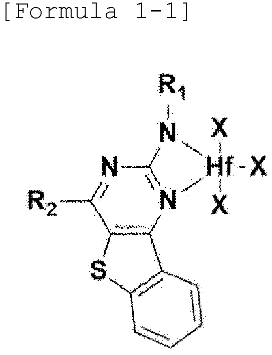 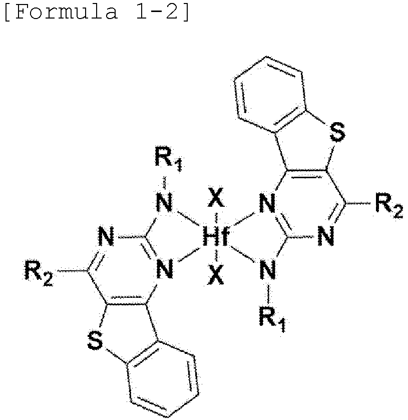 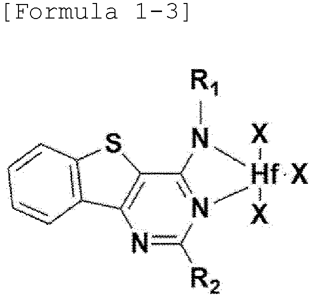 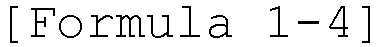 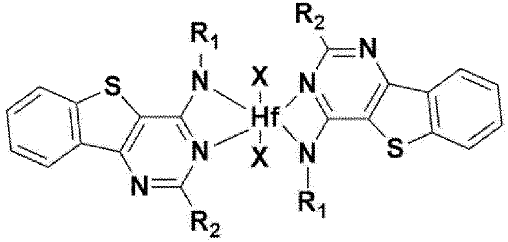 In Formula 1-1 to Formula 1-4,
   R₁ is an alkyl group of 1 to 20 carbon atoms or a cycloalkyl group of 5 to 20 carbon atoms,
   R₂ is a substituted or unsubstituted aryl group of 6 to 30 carbon atoms or a substituted or unsubstituted heteroaryl group of 2 to 30 carbon atoms, and if R₂ is substituted, R₂ is substituted with an alkyl group of 1 to 20 carbon atoms or a cycloalkyl group of 5 to 20 carbon atoms, and
   each X is independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms.
(5) The present invention provides the transition metal compound according to any one among (1) to (4), wherein the transition metal compound represented by Formula 1 is one selected from the group consisting of the compounds below. 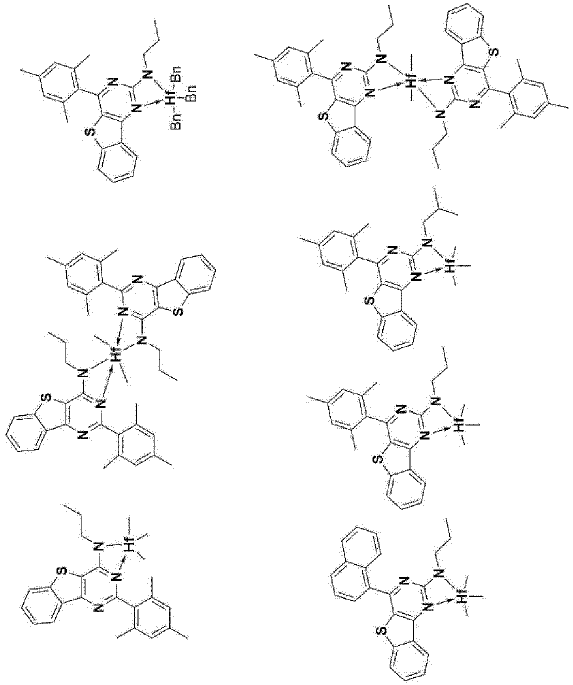 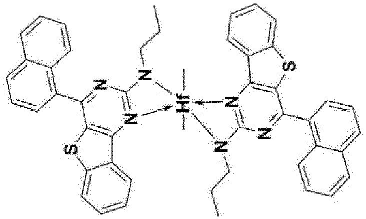 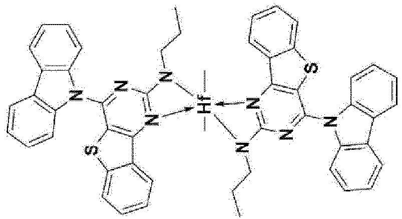 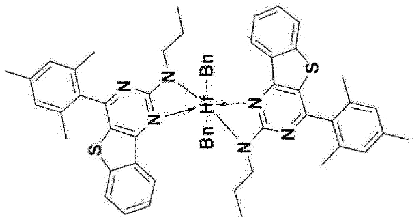 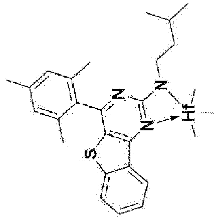 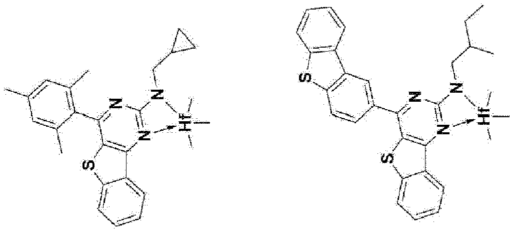 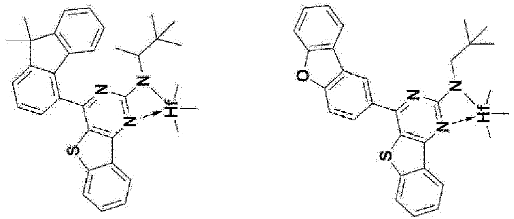 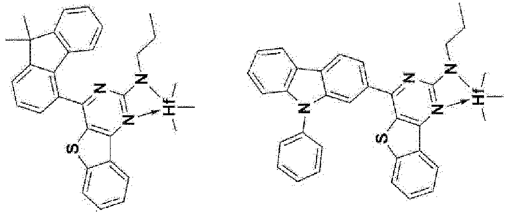 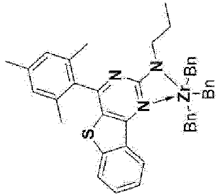 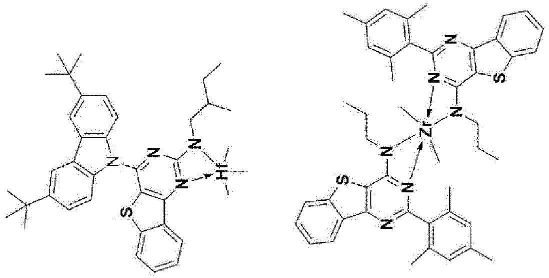 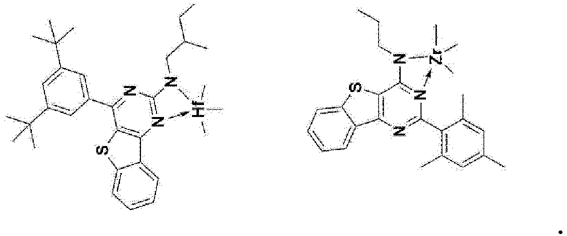
(6) The present invention provides a catalyst composition comprising the transition metal compound according to any one among (1) to (5) and a cocatalyst.
(7) The present invention provides the catalyst composition according to (6), wherein the catalyst composition further comprises a transition metal compound represented by Formula 2 below. 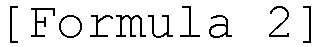 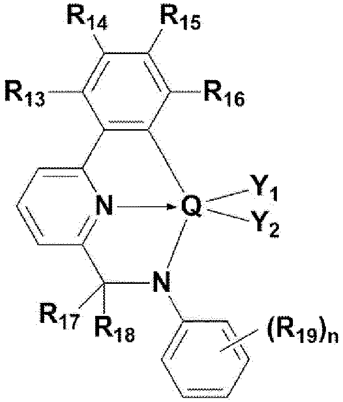 In Formula 2,
   Q is Ti, Zr or Hf,
   R₁₃ to R₁₆ are each independently hydrogen or an alkyl group of 1 to 20 carbon atoms, where adjacent two or more among them may be connected from each other to form rings,
   R₁₇ and R₁₈ are each independently hydrogen or a substituted or unsubstituted aryl group of 6 to 20 carbon atoms, where the substitution is conducted with an alkyl group of 1 to 6 carbon atoms,
   each R₁₉ is independently an alkyl group of 3 to 20 carbon atoms, a cycloalkyl group of 4 to 20 carbon atoms or an aryl group of 6 to 20 carbon atoms,
   n is 1 to 5, and
   Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.
(8) The present invention provides the catalyst composition according to (6) or (7), wherein the transition metal compound represented by Formula 2 is a compound represented by Formula 2A below.

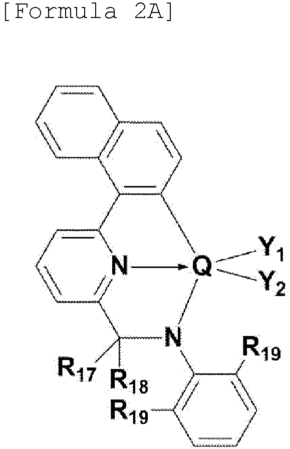

   In Formula 2A,
   Q is Ti, Zr or Hf,
   R₁₇ and R₁₈ are each independently hydrogen or a substituted or unsubstituted aryl group of 6 to 20 carbon atoms, where the substitution is conducted with an alkyl group of 1 to 6 carbon atoms,
   each R₁₉ is independently an alkyl group of 3 to 20 carbon atoms, a cycloalkyl group of 4 to 20 carbon atoms or an aryl group of 6 to 20 carbon atoms, and
   Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.
(9) The present invention provides the catalyst composition according to any one among (6) to (8), wherein the cocatalyst comprises one or more selected from Formula 3 to Formula 5 below.

   [Formula 3] - [Al(Rₐ)-O]ₘ-

   [Formula 4] D(Rₐ)₃

   [Formula 5] [L-H]⁺[Z(A)₄]⁻ or [L]⁺[Z(A)₄]⁻

   In the above Formulas,
   each Rₐ is independently a halogen radical, a hydrocarbyl radical of 1 to 20 carbon atoms, or a halogen-substituted hydrocarbyl radical of 1 to 20 carbon atoms,
   m is an integer of 2 or more,
   D is aluminum or boron,
   L is a neutral or cationic Lewis acid,
   Z is an element in group 13,
   each A is independently aryl of 6 to 20 carbon atoms, in which one or more hydrogen atoms can be substituted with substituents, or alkyl of 1 to 20 carbon atoms, and
   the substituent of A is halogen, hydrocarbyl of 1 to 20 carbon atoms, alkoxy of 1 to 20 carbon atoms, or aryloxy of 6 to 20 carbon atoms.
(10) The present invention provides a method for preparing an olefin polymer, the method comprising a step of polymerizing an olefin monomer in the presence of the catalyst composition according to any one among (6) to (9).
(11) The present invention provides the method for preparing an olefin polymer according to (10), wherein the olefin polymer is an ethylene/alpha-olefin copolymer.

### EFFECTS OF THE INVENTION

An olefin-based polymer having a high melting temperature and a high molecular weight may be easily prepared by using the transition metal compound according to the present invention as a catalyst.

### MODE FOR CARRYING OUT THE INVENTION

Hereinafter, the present invention will be described in more detail to assist the understanding of the present invention.

It will be understood that words or terms used in the present disclosure and claims shall not be interpreted as the meaning defined in commonly used dictionaries. It will be further understood that the words or terms should be interpreted as having a meaning that is consistent with their meaning in the technical idea of the invention, based on the principle that an inventor may properly define the meaning of the words or terms to best explain the invention.

The term used in the present description, "alkyl" means, unless otherwise referred to, linear, cyclic or branched hydrocarbon residue group, and includes methyl, ethyl, n-propyl, isopropyl, n-butyl, isobutyl, t-butyl, n-pentyl, isopentyl and hexyl, without limitation.

The term used in the present description, "cycloalkyl" refers to a non-aromatic cyclic hydrocarbon radical composed of carbon atoms, unless otherwise referred to. Non-limiting examples of the "cycloalkyl" include cyclopropyl, cyclobutyl, cyclopentyl, cyclohexyl and cycloheptyl.

The term used in the present description "aryl" refers to, unless otherwise referred to, an optionally substituted benzene ring, or a ring system formed by fusing one or more optional substituents. Examples of the optional substituent include substituted C₁₋₃ alkyl, substituted C₂₋₃ alkenyl, substituted C₂₋₃ alkynyl, heteroaryl, heterocyclic, aryl, alkoxy having optional one to three fluorine substituents, aryloxy, aralkoxy, acyl, aroyl, heteroaroyl, acyloxy, aroyloxy, heteroaroyloxy, sulfanyl, sulfinyl, sulfonyl, aminosulfonyl, sulfonylamino, carboxamide, aminocarbonyl, carboxyl, oxo, hydroxyl, mercapto, amino, nitro, cyano, halogen or ureido. The ring or the ring system may be optionally fused with an aryl ring (for example, benzene ring), carbon ring or heterocyclic ring, having optional one or more substituents. Non-limiting examples of the "aryl" group include phenyl, naphthyl, tetrahydronaphthyl, biphenyl, indanyl, anthracyl, phenanthryl, or substituted derivatives thereof.

In the present invention, "alkylaryl" means an aryl group substituted with the alkyl group.

In the present invention, "arylalkyl" means an alkyl group substituted with the aryl group.

In the prevent invention, a "hydrocarbyl" means a monovalent hydrocarbon group of 1 to 20 carbon atoms, composed of only carbon and hydrogen, irrespective of its structure, unless otherwise referred to, such as alkyl, aryl, alkenyl, alkynyl, cycloalkyl, alkylaryl and arylalkyl.

The transition metal compound of the present invention is characterized in being represented by Formula 1 below.

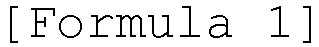

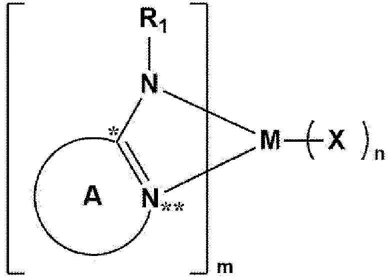

In Formula 1,
M is Ti, Zr or Hf,
R₁ is an alkyl group of 1 to 20 carbon atoms or a cycloalkyl group of 5 to 20 carbon atoms,
ring A is 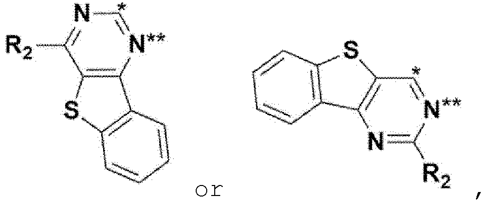 where R₂ is a substituted or unsubstituted aryl group of 6 to 30 carbon atoms, or a substituted or unsubstituted heteroaryl group of 2 to 30 carbon atoms, and if R₂ is substituted, R₂ is substituted with an alkyl group of 1 to 20 carbon atoms or a cycloalkyl group of 5 to 20 carbon atoms,
m is 1 and n is 3, or m is 2 and n is 2, and
each X is independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms.

The transition metal compound of the present invention is a fused ring pyrimidine derivative including a sulfur (S) atom with high electron density, where secondary amines are substituted at positions 2 and 4, and according to the substitution position, a tetragonal ring may be formed among the nitrogen atom of 1 or 3 of the pyrimidine, and the transition metal. Due to the structural specificity, copolymerization properties of a comonomer are low compared to a monomer, and a copolymer having high crystallinity may be formed.

Like this, the transition metal compound of the present invention may be useful as a catalyst for preparing an olefin polymer, and this is intrinsic properties that may be realized due to the novel structure of the compound newly developed in the present invention.

Particularly, in Formula 1, M may be Hf.

Particularly, in Formula 1, R₁ may be an alkyl group of 1 to 20 carbon atoms or a cycloalkyl group of 5 to 20 carbon atoms, an alkyl group of 1 to 15 carbon atoms, an alkyl group of 1 to 10 carbon atoms, an alkyl group of 1 to 6 carbon atoms, particularly, a propyl group.

Particularly, in Formula 1, ring A is 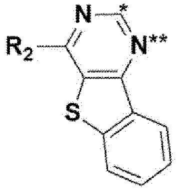 or 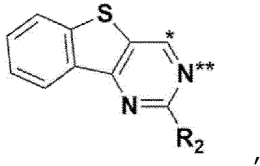 where R₂ maybe a substituted or unsubstituted aryl group of 6 to 30 carbon atoms or a substituted or unsubstituted heteroaryl group of 2 to 30 carbon atoms, or a substituted or unsubstituted aryl group of 6 to 20 carbon atoms or a substituted or unsubstituted heteroaryl group of 2 to 20 carbon atoms, and if R₂ is substituted, R₂ may be substituted with an alkyl group of 1 to 20 carbon atoms or a cycloalkyl group of 5 to 20 carbon atoms, or an alkyl group of 1 to 15 carbon atoms. Particularly, in Formula 1, R₂ may be a phenyl group, a naphthalene group or the like, R₂ may be substituted with an alkyl group of 1 to 15 carbon atoms, an alkyl group of 1 to 10 carbon atoms, an alkyl group of 1 to 6 carbon atoms, for example, a methyl group, and the number of substituents may be multiple.

Particularly, in Formula 1, m may be 1 and n may be 3, or m may be 2 and n may be 2.

Particularly, in Formula 1, each X may be independently an alkyl group of 1 to 10 carbon atoms, an alkyl group of 1 to 6 carbon atoms, an alkyl group of 1 to 3 carbon atoms, an aryl group of 6 to 20 carbon atoms, an aryl group of 6 to 10 carbon atoms, an arylalkyl group of 7 to 20 carbon atoms, an arylalkyl group of 11 to 20 carbon atoms, particularly, a methyl group, a phenyl group or a phenylmethyl group (benzyl group).

Particularly, the transition metal compound represented by Formula 1 may be a transition metal compound of one selected from the group consisting of Formula 1-1 to Formula 1-4 below.

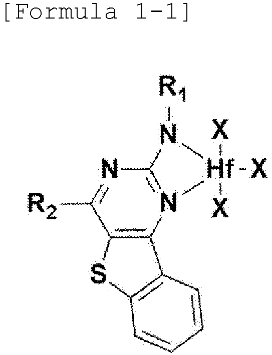

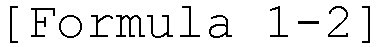

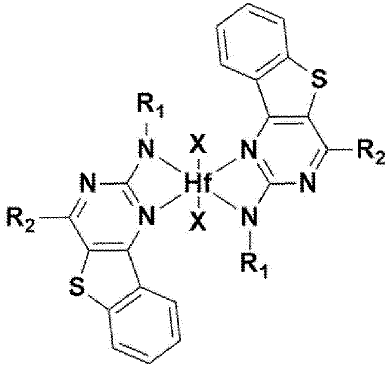

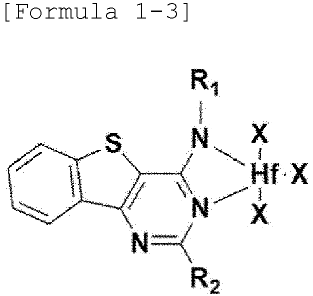

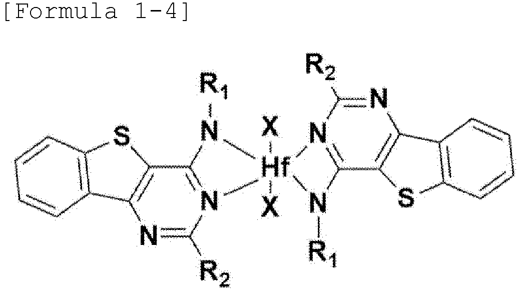

In Formula 1-1 to Formula 1-4,
R₁ is an alkyl group of 1 to 20 carbon atoms or a cycloalkyl group of 5 to 20 carbon atoms,
R₂ is a substituted or unsubstituted aryl group of 6 to 30 carbon atoms or a substituted or unsubstituted heteroaryl group of 2 to 30 carbon atoms, and if R₂ is substituted, R₂ is substituted with an alkyl group of 1 to 20 carbon atoms or a cycloalkyl group of 5 to 20 carbon atoms, and
each X is independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms.

The transition metal compound represented by Formula 1 may be one selected from the group consisting of the compounds below, but all transition metal compounds corresponding to Formula 1 are included in the present invention, without limitation.

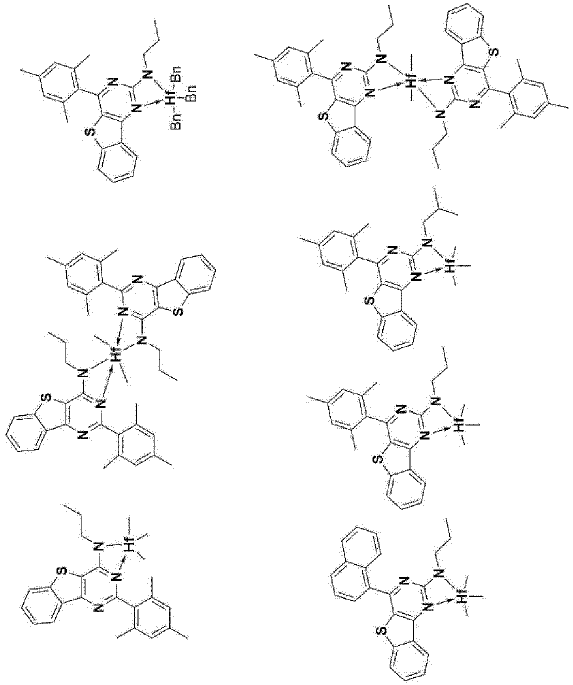

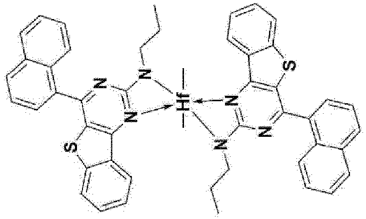

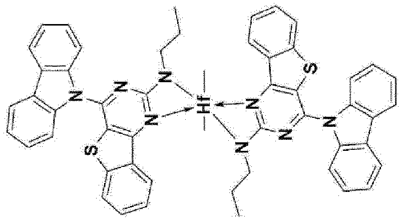

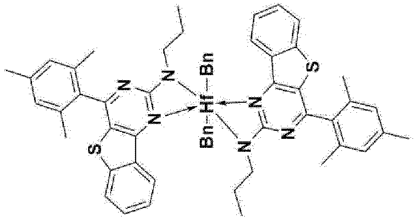

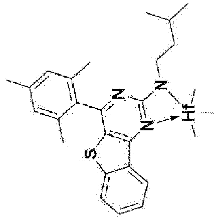

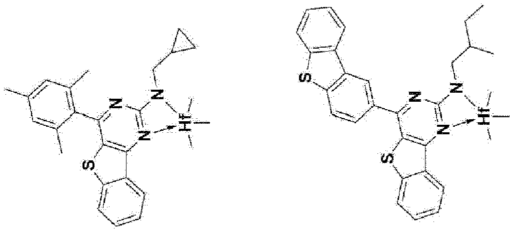

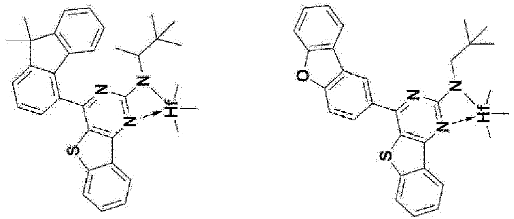

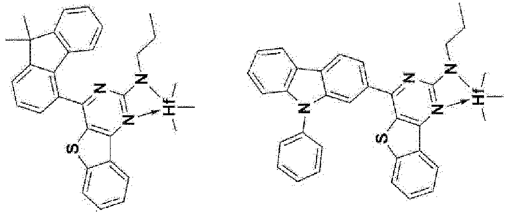

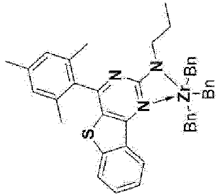

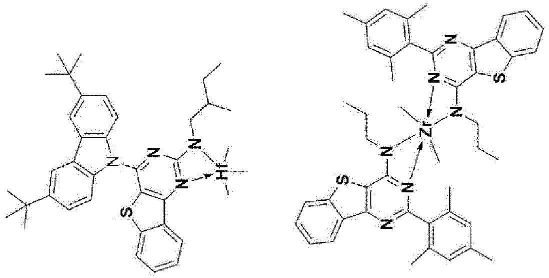

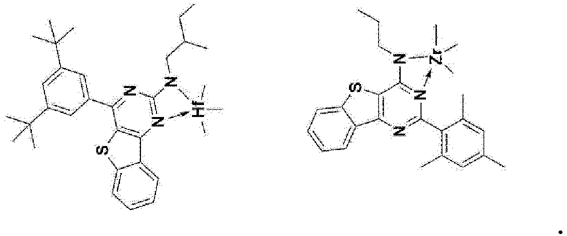

The transition metal compound of the present invention is characterized in including the transition metal compound represented by Formula 1 and a cocatalyst.

In the present invention, a "composition" includes a mixture of materials including the composition as well as a reaction product and a decomposition product obtained from the materials of the composition.

In addition, the catalyst composition of the present invention may further include a cocatalyst.

The cocatalyst may use a known one in this technical field, for example, one or more selected from the group consisting of Formula 4 to Formula 6 may be used as the cocatalyst.

[Formula 4] -[Al(Rₐ)-O]ₘ-

[Formula 5] D(Rₐ)₃

[Formula 6] [L-H]⁺[Z(A)₄]⁻ or [L]⁺[Z(A)₄]⁻

In the above Formulas,
each Rₐ is independently a halogen radical, a hydrocarbyl radical of 1 to 20 carbon atoms, or a halogen-substituted hydrocarbyl radical of 1 to 20 carbon atoms,
m is an integer of 2 or more,
D is aluminum or boron,
L is a neutral or cationic Lewis acid,
Z is an element in group 13,
each A is independently an aryl group of 6 to 20 carbon atoms, wherein one or more hydrogen atoms can be substituted with substituents, or an alkyl group of 1 to 20 carbon atoms, and
the substituent of A is a halogen group, a hydrocarbyl group of 1 to 20 carbon atoms, an alkoxy group of 1 to 20 carbon atoms, or an aryloxy group of 6 to 20 carbon atoms.

The compound represented by Formula 4 is not specifically limited as long as it is alkylaluminoxane. Preferable examples may include methylaluminoxane, ethylaluminoxane, isobutylaluminoxane, butylaluminoxane, etc., particularly preferably, methylaluminoxane.

The compound represented by Formula 5 is not specifically limited, and preferable examples thereof may include trimethylaluminum, triethylaluminum, triisobutylaluminum, tripropylaluminum, tributylaluminum, dimethylchloroaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, etc., and particularly preferably, be selected from trimethylaluminum, triethylaluminum, and triisobutylaluminum.

Examples of the compound represented by Formula 6, if Z is boron, may include, for example, dioctadecylmethylammonium tetrakis(pentafluorophenyl)borate [(C₁₈H₃₇)₂N(H)Me]⁺[B(C₆F₅)₄]⁻, dioctadecylmethylammonium, tetrakis(phenyl)borate, dioctadecylmethylammonium tetrakis[3,5-bis(trifluoromethyl)phenyl]borate, triethylammonium tetraphenylborate, tributylammonium tetraphenylborate, trimethylammonium tetraphenylborate, tripropylammonium tetraphenylborate, trimethylammonium tetra(p-tolyl)borate, trimethylammonium tetra(o,p-dimethylphenyl) borate, tributylammonium tetra(p-trifluoromethylphenyl)borate, trimethylammonium tetra(p-trifluoromethylphenyl)borate, tributylammonium tetrapentafluorophenylborate, N,N-diethylanilidium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, tripropylammonium tetra(p-tolyl)borate, triethylammonium tetra(o,p-dimethylphenyl)borate, trimethylammonium tetra(o,p-dimethylphenyl) borate, triphenylcarbonium tetra(p-trifluoromethylphenyl)borate, triphenylcarbonium tetrapentafluorophenylborate, or combinations thereof, if Z is aluminum, for example, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra (o,p-dimethylphenyl) aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, triethylammonium tetraphenylaluminum, tributylammonium tetraphenylaluminum, or combinations thereof, without limitation.

Particularly, the cocatalyst used in the present invention may be the compound represented by Formula 6, particularly, dioctadecylmethylammonium tetrakis(pentafluorophenyl)borate.

In addition, the transition metal compound represented by Formula 1 and the cocatalyst may be used in a supported type by a support. Silica or alumina may be used as the support, without limitation.

In the present invention, the catalyst composition may further include a transition metal compound represented by Formula 2 below.

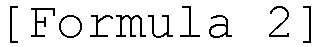

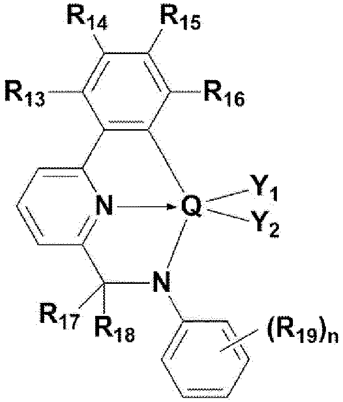

In Formula 2,
Q is Ti, Zr or Hf,
R₁₃ to R₁₆ are each independently hydrogen or an alkyl group of 1 to 20 carbon atoms, where adjacent two or more among them may be connected from each other to form rings,
R₁₇ and R₁₈ are each independently hydrogen or a substituted or unsubstituted aryl group of 6 to 20 carbon atoms, where the substitution is conducted with an alkyl group of 1 to 6 carbon atoms,
each R₁₉ is independently an alkyl group of 3 to 20 carbon atoms, a cycloalkyl group of 4 to 20 carbon atoms or an aryl group of 6 to 20 carbon atoms,
n is 1 to 5, and
Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

In the present invention, if the transition metal compound represented by Formula 1 and the transition metal compound represented by Formula 2 are used together, a catalyst having high elasticity and a catalyst having excellent heat resistance are mixed and used, and accordingly, a polymer exhibiting excellent degrees of elasticity and heat resistance at the same time may be prepared.

Particularly, in Formula 2, Q may be Hf.

Particularly, in Formula 2, R₁₃ to R₁₆ may be each independently hydrogen or an alkyl group of 1 to 20 carbon atoms, where adjacent two or more among them may be connected from each other to form rings, or R₁₃ and R₁₄ may be each independently an alkyl group of 1 to 20 carbon atoms and may be connected with each other to form an aromatic ring of 5 to 20 carbon atoms, and R₁₅ and R₁₆ may be hydrogen.

Particularly, in Formula 2, R₁₇ and R₁₈ may be each independently hydrogen or a substituted or unsubstituted aryl group of 6 to 20 carbon atoms, where the substitution may be conducted with an alkyl group of 1 to 6 carbon atoms.

Particularly, in Formula 2, each R₁₉ may be independently an alkyl group of 3 to 20 carbon atoms, a cycloalkyl group of 4 to 20 carbon atoms or an aryl group of 6 to 20 carbon atoms, particularly, an alkyl group of 3 to 6 carbon atoms.

Particularly, in Formula 2, n may be 1 to 5, 1 to 3, particularly, 2.

Particularly, in Formula 2, Y₁ and Y₂ may be each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, particularly, an alkyl group of 1 to 20 carbon atoms.

More particularly, the transition metal compound represented by Formula 2 may be a compound represented by Formula 2A below.

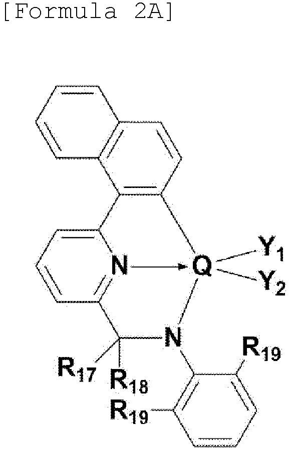

In Formula 2A,
Q is Ti, Zr or Hf,
R₁₇ and R₁₈ are each independently hydrogen or a substituted or unsubstituted aryl group of 6 to 20 carbon atoms, where the substitution is conducted with an alkyl group of 1 to 6 carbon atoms,
each R₁₉ is independently an alkyl group of 3 to 20 carbon atoms, a cycloalkyl group of 4 to 20 carbon atoms or an aryl group of 6 to 20 carbon atoms, and
Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

In Formula 2A,
Q, R₁₇ to R₁₉, Y₁ and Y₂ are the same as defined above.

The transition metal compound represented by Formula 2 may particularly be a compound below, but all transition metal compounds corresponding to Formula 2 may be included in the present invention, without limitation.

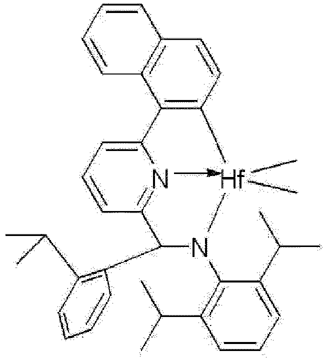

In addition, in the catalyst composition, the transition metal compound represented by Formula 1 and the transition metal compound represented by Formula 2 may be 10:1 to 1:10, particularly, 1:1 to 1:6, 1:1 to 1:5, or 1:3 to 1:4.

The method for preparing an olefin polymer of the present invention is characterized in including a step of polymerizing an olefin monomer in the presence of the catalyst composition.

In the present invention, the "polymer" refers to a polymer compound prepared by polymerizing monomers of the same or different type. Like this, a general term of polymer includes the term of homopolymer used for referring to a polymer prepared from only one type of a monomer and the term of interpolymer specified as follows.

In the present invention, the term "interpolymer" refers to a polymer prepared by polymerizing at least two different types of monomers. Like this, a general term of interpolymer refers to a polymer prepared from two different types of monomers, and includes a commonly used copolymer and a polymer prepared from two or more different types of monomers.

In the present invention, the olefin monomer may be one or more selected from the group consisting of ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene and 1-eicosene, without limitation.

Particularly, the olefin polymer of the present invention may be an olefin homopolymer, or an olefin-alpha-olefin copolymer according to the type of the olefin monomer, and preferably, may be an ethylene/alpha-olefin copolymer. In this case, the content of the alpha-olefin monomer, which is a comonomer, may be suitably selected according to the use, purpose, etc., of the olefin polymer by a person skilled in the art, and may be about 1 to 99 mol%.

The catalyst composition may be injected after being dissolved or diluted in an aliphatic hydrocarbon solvent of 5 to 12 carbon atoms, such as pentane, hexane, heptane, nonane, decane, isomers thereof, an aromatic hydrocarbon solvent such as toluene and benzene, or a hydrocarbon solvent substituted with a chlorine atom, such as dichloromethane and chlorobenzene, which are suitable for an olefin polymerization process. The solvent used herein may preferably be used after removing a small amount of water or air, which functions as a catalyst poison, by treating with a small amount of alkylaluminum, and may be treated by further using a cocatalyst.

The most preferable preparation process using the catalyst composition is a solution process, and if the composition is used together with an inorganic support such as silica, it may also be applied to a slurry process or a gas phase process.

The polymerization may be performed by homopolymerizing one type of olefin monomer or copolymerizing two or more olefin monomers by using one of a continuous slurry polymerization reactor, a loop slurry reactor, a gas phase reactor, or a solution reactor.

In addition, to remove moisture in the reactor during performing polymerization reaction, an organoaluminum compound may be further injected, and the polymerization reaction may be performed in the presence thereof. Particular examples of such organoaluminum compound may include trialkylaluminum, dialkylaluminum halide, alkylaluminum dihalide, aluminum dialkyl hydride or alkyl aluminum sesquihalide, and more particular examples thereof may include Al(C₂H₅)₃, Al(C₂H₅)₂H, Al(C₃H₇)₃, Al(C₃H₇)₂H, Al (i-C₄H₉)₂H, Al(C₈H₁₇)₃, Al(C₁₂H₂₅)₃, Al(C₂H₅)(C₁₂H₂₅)₂, Al (i-C₄H₉)(C₁₂H₂₅)₂, Al(i-C₄H₉)₂H, Al(i-C₄H₉)₃, (C₂H₅)₂AlCl, (i-C₃H₉)₂AlCl or (C₂H₅)₃Al₂Cl₃. Such an organoaluminum compound may be continuously injected to the reactor, or may be injected in a ratio of about 0.1 to 10 mol per 1 kg of a reaction medium, which is injected to the reactor for suitable removal of moisture.

According to an embodiment of the present invention, the polymerization of the olefin polymer may be performed under a temperature of about 80 to 200°C, particularly, a temperature of about 90 to 200°C, or a temperature of about 130 to 200°C, and a pressure of about 20 to 100 bar, particularly, a pressure of about 20 to 50 bar, or pressure conditions of about 20 to 40 bar, for about 8 minutes to 2 hours.

### Examples

Hereinafter, the present invention will be explained in more detail referring to the Examples. However, the Examples are for illustrating the present invention, and the scope of the present invention is not limited thereto.

### <Preparation of Transition Metal Compound>

### Preparation Example 1

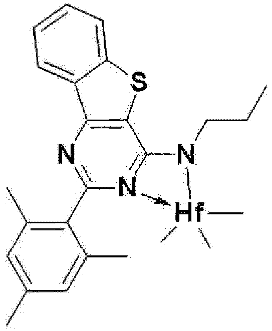

The compound was prepared according to the scheme below.

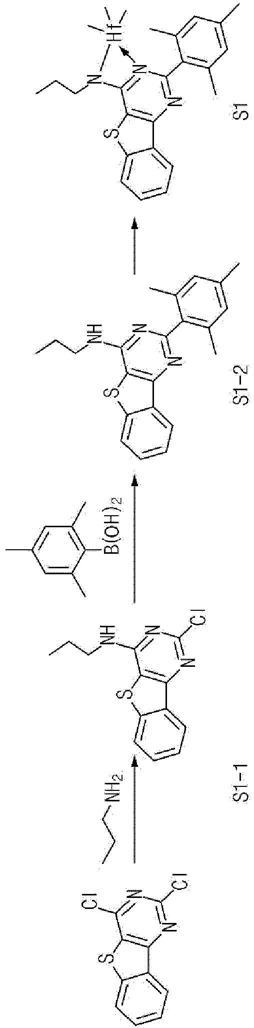

### (1) Preparation of Compound S1-1

2,4-Dichlorobenzo[4,5]thieno[3,2-d]pyrimidine (3.0 g, 11.8 mmol) and propan-1-amine (2.09 g, 35.3mmol) were added to 30 mL of 1,4-dioxane. K₂CO₃ (4.9 g, 35.3 mmol) was added thereto, and the temperature was raised to 80°C. After heating and stirring for about 12 hours, the temperature was cooled to room temperature, and 100 mL of water was added thereto. A precipitated solid was filtered, and the filtered solid was dissolved again in chloroform, washed with water once, separated, slurried with anhydrous magnesium sulfate, and filtered. The filtrate was concentrated under a reduced pressure. A small amount of ethyl acetate was added to the concentrated compound, followed by stirring at room temperature. The solid thus produced was filtered to prepare Target Compound S1-1 of white color (2.7 g, yield 82.7%).

### (2) Preparation of Compound S1-2

Compound S1-1 (2.0 g, 7.2 mmol) and mesitylboronic acid (1.3 g, 7.9 mmol) were dissolved in 60 mL of 1,4-dioxane, and then, 20 mL of an aqueous solution of K₃PO₄ (3.06 g, 14.4 mmol) was added thereto, and the temperature was raised. To the mixture in a refluxing state, tricyclohexylphosphine (0.12 g, 0.4 mmol) and bis(dibenzylideneacetone)palladium(0) (0.12 g, 0.2 mmol) in a dissolved state in 1,4-dioxane was added thereto, followed by refluxing and stirring for 12 hours. After finishing the reaction, the temperature was reduced to room temperature, 1,4-dioxane was removed under a reduced pressure. Ethyl acetate was added to the concentrated mixture, and extraction was performed. An organic layer was separated, washed with water once, slurried with anhydrous magnesium sulfate and filtered. The filtrate was concentrated under a reduced pressure. The mixture was separated by column chromatography using a mixture solvent of hexane and ethyl acetate in 50/1 to prepare Target Compound S1-2 of light yellow color (0.75 g, yield 29%).

### (3) Preparation of Compound S1

In a glove box, after dissolving Compound S1-2 (0.1 g, 0.3 mmol) in 10 mL of toluene, n-BuLi (2.5 M in Hexane) (0.12 mL, 0.3 mmol) was added, and the resultant was subjected to stirring at room temperature for 1 hour. In another flask, hafnium tetrachloride (0.09 g, 0.3 mmol) was diluted in 5 mL of toluene, and methylmagnesium bromide (3.0 M in diethyl ether) (0.41 mL, 1.2 mmol) was added thereto at a low temperature. After stirring for about 5 minutes, a mixture solution of Compound S1-2 and n-BuLi was added. Stirring was performed at room temperature for 4 hours. 15 mL of hexane was added to the mixture, and stirring was performed for 2 hours. The mixture was filtered, and the filtrate was concentrated under a reduced pressure. 5 mL of methyl tert-butyl ether was added thereto to dissolve the obtained concentrate, and the resultant was concentrated to about 1/2 and recrystallized to prepare Target Compound S1 (0.08 g, yield 49.5%).

¹H NMR (500 MHz, CDCl₃) : 8.40 (d,1H), 7.95(d,1H), 7.63(t,1H), 7.50(t,1H), 6.83(s,2H), 2.99(t,2H), 2.36(s,3H), 1.83(s,6H), 1.59-1.64(q,2H), 0.97(t,3H), 0.20(s,9H)

### Preparation Example 2

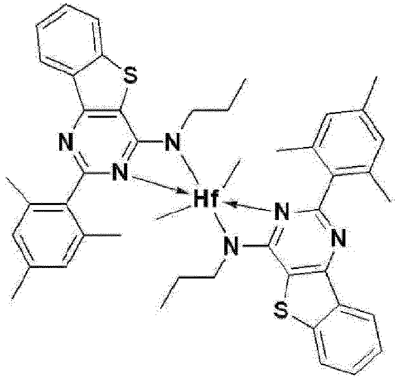

The compound was prepared according to a method below.

In a glove box, after dissolving Compound S1-2 (0.1 g, 0.3 mmol) in 10 mL of toluene, n-BuLi (2.5 M in Hexane) (0.12 mL, 0.3 mmol) was added, and the resultant was subjected to stirring at room temperature for 1 hour. In another flask, hafnium tetrachloride (0.04 g, 0.15 mmol) was diluted in 5 mL of toluene, and methylmagnesium bromide (3.0 M in diethyl ether) (0.21 mL, 0.6 mmol) was added thereto at a low temperature. After stirring for about 5 minutes, a mixture solution of Compound S1-2 and n-BuLi was added. Stirring was performed at room temperature for 4 hours. 15 mL of hexane was added to the mixture, and stirring was performed for 2 hours. The mixture was filtered through a celite pad, and the filtrate was concentrated under a reduced pressure to prepare Target Compound S2 (0.05 g, yield 38.9%).
¹H NMR (500 MHz, CDCl₃): 8.41(d,2H), 7.96(d,2H), 7.63(t,2H), 7.49(t,2H), 6.84(s,4H), 3.00(br,4H), 2.36(s,6H), 1.83(s,12H), 1.61(m,4H), 0.99(t,6H), 0.20 (s,6H)

### Preparation Example 3

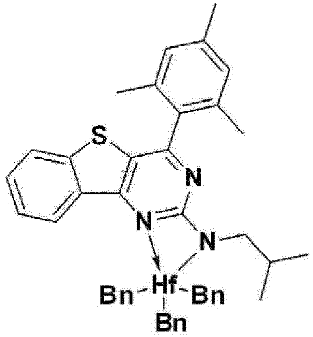

The compound was prepared according to the scheme below.

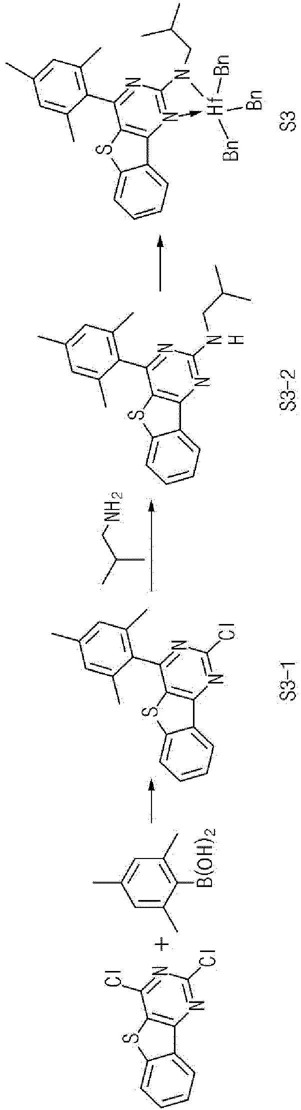

### (1) Preparation of Compound S3-1

2,4-Dichlorobenzo[4,5]thieno[3,2-d]pyrimidine (3.0 g, 11.8 mmol) and mesitylboronic acid (2.12 g, 12.9 mmol) were dissolved in 40 mL of 1,4-dioxane, and 15 mL of an aqueous solution of K₂CO₃ (4.88 g, 35.3 mmol) was added thereto, followed by heating. To the mixture in a refluxing state, tetrakis(triphenylphosphine)-palladium(0) (0.14 g, 0.11 mmol) was added, and refluxing and stirring was performed for 12 hours. After finishing the reaction, the resultant was cooled to room temperature, 1,4-dioxane was removed under a reduced pressure, ethyl acetate was added to the concentrated mixture, and extraction was performed. An organic layer was separated, washed with water once, slurried with anhydrous magnesium sulfate and filtered. The filtrate was concentrated under a reduced pressure. The mixture was slurried using a mixture solvent of an excessive amount of hexane and a small amount of ethyl acetate to prepare Target Compound S3-1 of light yellow color (3.5 g, yield 87.8%).

### (2) Preparation of Compound S3-2

Compound S3-1 (3.0 g, 11.8 mmol) and 2-methylpropan-1-amine (0.44 mL, 4.4 mmol) were dissolved in 10 mL of N,N-dimethylformamide, and potassium iodide (0.05 g, 0.3 mmol) and triethylamine (1.23 mL, 8.9 mmol) were added thereto, followed by heating to 60°C. After stirring for 12 hours, the reaction mixture was added to 100 mL of water and extracted with ethyl acetate. An organic layer was separated, additionally washed with water once, slurried with anhydrous magnesium sulfate and filtered. The filtrate was concentrated under a reduced pressure. The concentrate was solidified and slurried with a small amount of hexane and filtered to prepare Target Compound S3-2 of light yellow color (0.64 g, yield 60.0%).

### (3) Preparation of Compound S3

In a glove box, after dissolving Compound S3-2 (0.1 g, 0.3 mmol) in 10 mL of toluene, tetrabenzylhafnium (0.14 g, 0.3 mmol) was added, and the resultant was subjected to stirring at room temperature for 12 hours. After finishing the reaction, the mixture was heated to 50°C to remove the solvent under a reduced pressure. Hexane substitution concentration was performed for the concentrated compound to prepare Target Compound S3 in an orange foam type (0.06 g, yield 27.3%).
¹H NMR (500 MHz, CDCl₃) : 8.44(d,1H), 7.45(d,1H), 7.57(t,1H), 7.50(t,1H), 7.15-7.32(m,15H), 6.98(s,2H), 3.45(t,2H), 2.41(s, 6H), 2.36(s,3H), 2.09(s,6H), 2.0(m,1H), 1.03 (d, 6H)

### Preparation Example 4

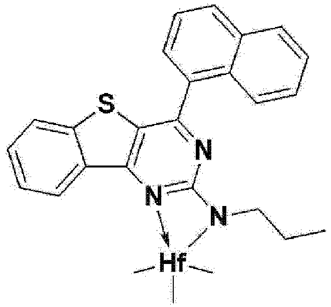

The compound was prepared according to the scheme below.

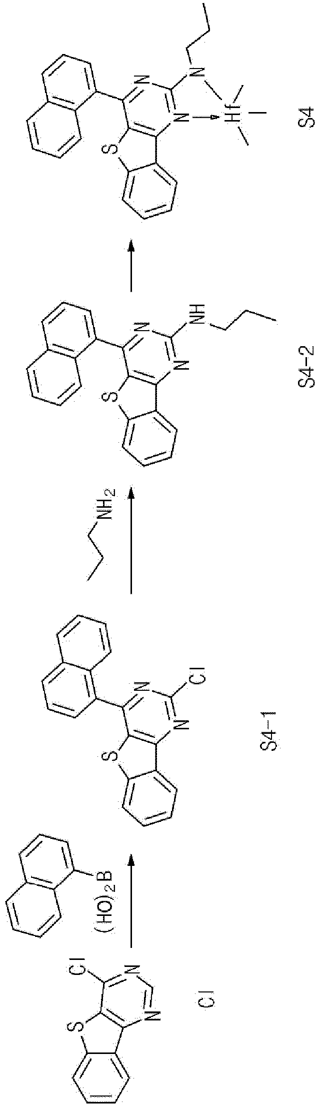

### (1) Preparation of Compound S4-1

Target Compound S4-1 of a light yellow solid was prepared by performing the same manner as in the Preparation Example of Compound S3-1 using 2,4-dichlorobenzo[4,5]thieno[3,2-d]pyrimidine (5.0 g, 19.6 mmol) and naphthalen-1-ylboronic acid (3.54 g, 20.6 mmol) (5.8 g, yield 85.0%).

### (2) Preparation of Compound S4-2

Target Compound S4-2 of a light yellow solid was prepared by performing the same manner as in the Preparation Example of Compound S3-2 using Compound S4-1 (2.73 g, 7.9 mmol) and propan-1-amine (1.29 mL, 15.7 mmol) (2.42 g, yield 83.2%).

### (3) Preparation of Compound S4

Target Compound S4 of orange color was prepared by performing the same manner as in the Preparation Example of Compound S1 using Compound S4-2 (0.32 g, 0.9 mmol) in a glove box (0.15 g, yield 31.2%).

¹H NMR(500 MHz, CDCl₃): 8.49(d,1H), 8.06(d,1H), 8.01(d,lH), 7.95(d,1H), 7.82(d,1H), 7.74(d,1H), 7.62(d,1H), 7.47-7.59(m,4H), 3.62(q,2H), 1.76(m,2H), 1.07(t,3H), 0.9(s,9H).

### Preparation Example 5

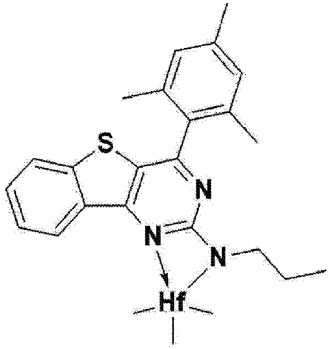

The compound was prepared according to the scheme below.

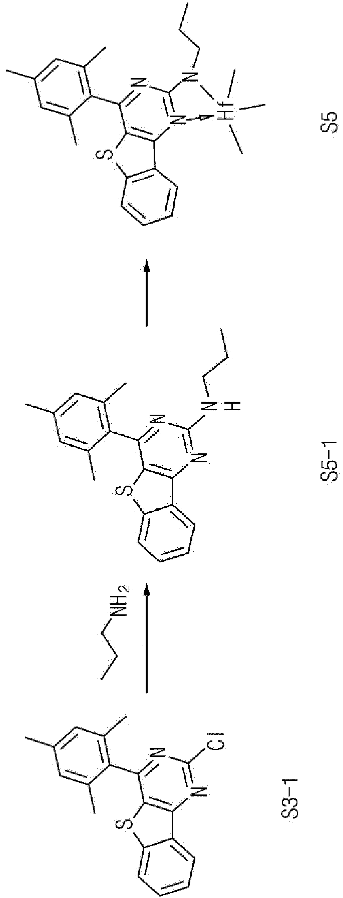

### (1) Preparation of Compound S5-1

Target Compound S5-1 of a light yellow solid was prepared by performing the same manner as in the Preparation Example of Compound S3-2 using Compound S3-1 (1.0 g, 3.0 mmol) and propan-1-amine (0.36 mL, 4.4 mmol) (0.5 g, 46.9%).

### (2) Preparation of Compound S5

Target Compound S5 of orange color was prepared by performing the same manner as in the Preparation Example of Compound S1 using Compound S5-1 (0.50 g, 1.4 mmol) in a glove box (0.34 g, yield 42.1%).
¹H NMR (500 MHz, CDCl₃):
8.50(d,1H), 7.69(d,1H), 7.58(t,1H), 7.52(t,1H), 6.94(s,2H), 3.13(t,2H), 2.40(s,3H), 1.85(s,6H), 1.60(m,2H), 1.00(m,3H), 0.93(s,9H)

### Preparation Example 6

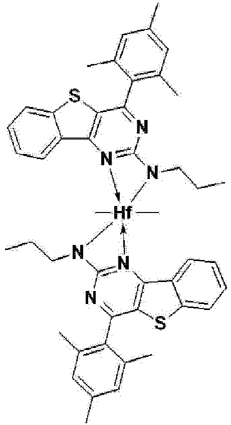

The compound was prepared according to the scheme below.

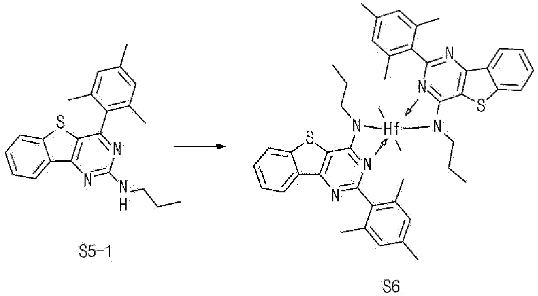

Target Compound S6 of light yellow color was prepared by performing the same manner as in the Preparation Example of Compound S2 using Compound S5-1 (0.1 g, 0.3 mmol) in a glove box (0.05 g, yield 38.9%).
¹H NMR (500 MHz, CDCl₃):
8.50(d,2H), 7.69(d,2H), 7.58(t,2H), 7.52(t,2H), 6.94(s,4H), 3.13(t,4H), 2.40(s,6H), 1.85(s,12H), 1.60(m,4H), 1.00(m, 6H), 0.90 (s, 6H)

### Preparation Example 7

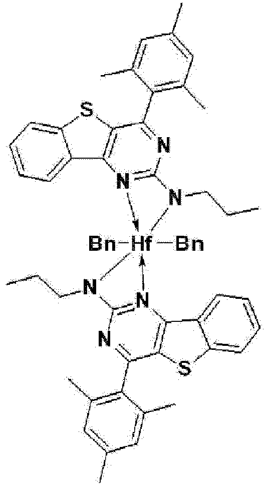

The compound was prepared according to the scheme below.

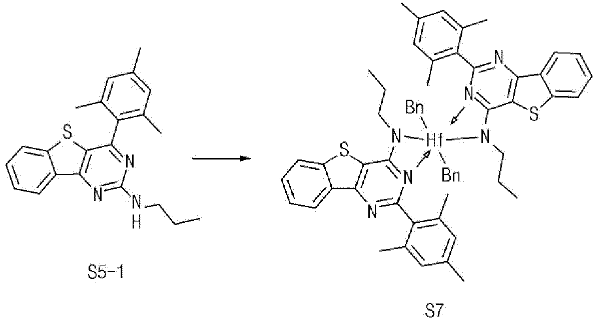

In a glove box, Compound S5-1 (0.1 g, 0.3 mmol) and tetrabenzylhafnium (0.08 g, 0.15 mmol) were added to 5 mL of toluene and stirred at room temperature for 12 hours. After concentrating the mixture under a reduced pressure, substitution concentration was performed using hexane twice to prepare Target Compound S7 of dark orange color (0.1 g, yield 65.1%).
¹H NMR (500 MHz, C₆D₆):
8.48(d,2H), 7.44(d,2H), 6.92-7.13(m,10H), 6.70(s,4H), 6.52(d,4H), 3.19(m,4H), 2.20(s,6H), 1.95(s,12H), 1.70(m,4H), 1.48(s,4H), 1.00(t,6H)

### Preparation Example 8

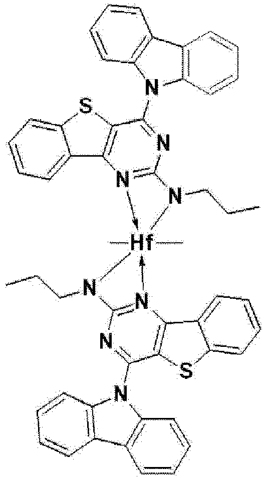

The compound was prepared according to the scheme below.

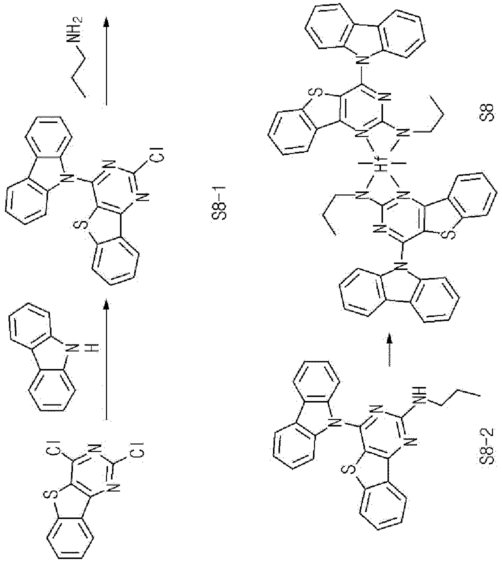

### (1) Preparation of Compound S8-1

Carbazole (3.44 g, 20.6 mmol) was dissolved in 65 ml of tetrahydrofuran and cooled to 0°C. NaH (0.94 g, 23.5 mmol) was slowly added and the resultant was subjected to stirring for 10 minutes at the same temperature. To the mixture, dichlorobenzo [4,5] thieno [3, 2-d] pyrimidine (5.0 g, 19.6 mmol) was added and the resultant was subjected to stirring at room temperature for 12 hours. The mixture was poured to 500 mL of water and extracted with dichloromethane. An organic layer was additionally washed with water once, separated, slurried with anhydrous magnesium sulfate, filtered and concentrated under a reduced pressure. To the concentrated compound, a small amount of ethyl acetate was added, slurried and filtered to prepare Target Compound S8-1 of a white solid (5.07 g, yield 67.0%).

### (2) Preparation of Compound S8-2

Target Compound S8-2 of a light yellow solid was prepared by performing the same manner as in the Preparation Example of Compound S3-2 using Compound S8-1 (2.0 g, 5.2 mmol) and propan-1-amine (0.64 mL, 7.8 mmol) (1.7 g, 80.3%).

### (3) Preparation of Compound S8

Target Compound S8 of dark yellow color was prepared by performing the same manner as in the Preparation Example of Compound S2 using Compound S8-2 (0.5 g, 1.2 mmol) in a glove box (0.42 g, yield 67.0%).
¹H NMR(500 MHz, CDCl₃):
8.47 (d, 2H), 8.16(d,4H), 7.75(m,6H), 7.60(t,2H), 7.52(t,2H), 7.46(t,4H), 7.38(t,4H), 3.62(m,4H), 1.78(q,4H), 1.07(t,6H), 0.90(s,6H)

### Preparation Example 9

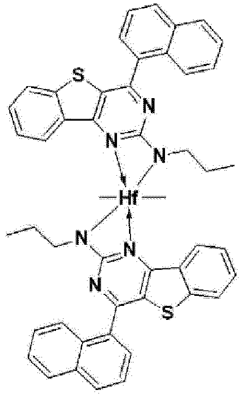

The compound was prepared according to the scheme below.

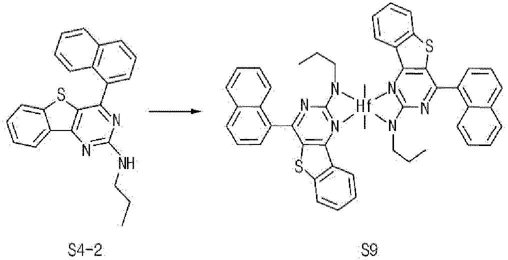

Target Compound S9 of yellow color was prepared by performing the same manner as in the Preparation Example of Compound S2 using Compound S4-2 (0.2 g, 0.5 mmol) in a glove box (0.19 g, yield 78.8%).
¹H NMR(500 MHz, CDCl₃):
8.49(d,2H), 8.06(d,2H), 8.01(d,2H), 7.95(d,2H), 7.82(d,2H), 7.74(d,2H), 7.62(d,2H), 7.47-7.59(m,8H), 3.62(q,4H), 1.76(m,4H), 1.07(t,6H), 0.9(s,6H)

### Comparative Preparation Example 1

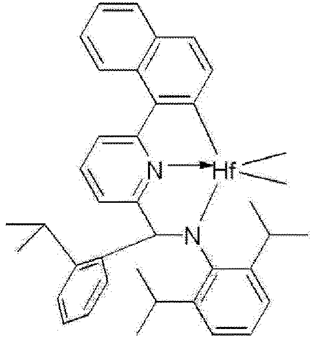

Comparative Preparation Example 1 was prepared according to a method known in a document *[*Organometallics 2011, 30, 12, 3318-3329].

### Comparative Preparation Example 2

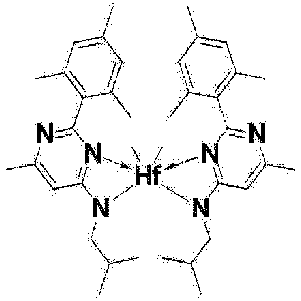

The compound was prepared according to the scheme below.

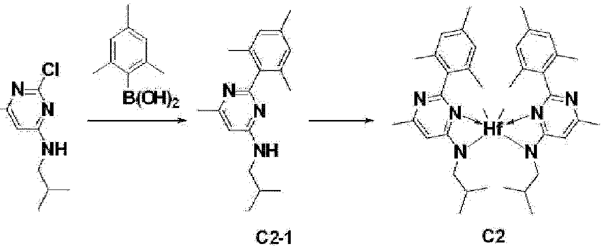

### (1) Preparation of Compound C2-1

2-Chloro-N-isobutyl-6-methylpyrimidin-4-amine) (1.0 g, 5.0 mmol) and 2,4,6-trimethylphenyl boronic acid (0.86 g, 5.3 mmol) were dissolved in 60 mL of tetrahydrofuran, and 20 mL of an aqueous solution of K₂CO₃ (2.08 g, 15 mmol) was added thereto, followed by heating. To the mixture in a refluxing state, Pd(PPh₃)₄ (0.12 g, 0.1 mmol) was added and the resultant was subjected to stirring for 12 hours. The reaction mixture was cooled to room temperature, ethyl acetate and water were added thereto, and extraction was performed. An organic layer was separated, dried with anhydrous magnesium sulfate and filtered. The filtrate was concentrated under a reduced pressure. The concentrated compound was recrystallized in MeOH to obtain a white solid product (1.4 g, yield 99%).

### (2) Preparation of Compound C2

Target Compound C2 of yellow color was prepared by performing the same manner as in the Preparation Example of Compound S2 using Compound C2-1 (0.2 g, 0.71 mmol) in a glove box (0.12 g, yield 44%).
¹H-NMR (500 MHz, C₆D₆): 6.67(s,4H), 5.26(s,2H), 3.04(t,4H), 2.07(s,6H), 2.04(s,6H), 1.87(s,12H), 1.70(s,6H), 1.41(m,2H), 0.81 (d, 12H)

### <Polymerization of Ethylene/Alpha-olefin Copolymer>

### Example 1

To a 2 L autoclave reactor, a hexane solvent (900 mL) and 1-octene (600 mL) were added, and the temperature of the reactor was preheated to 120°C. At the same time, the pressure of the reactor was charged with ethylene (35 bar) in advance. 3 µmol of a mixture catalyst of Preparation Example 1 and Preparation Example 2 in 3:1, 15 µmol of 10 eq of a dimethylanilinium tetrakis(pentafluorophenyl)borate cocatalyst (AB) in contrast to the catalyst, and 0.6 mmol of Tibal as a scavenger were added in order to the reactor by applying an argon pressure of a high pressure, and a copolymerzation reaction was carried out for 8 minutes. Then, a remaining ethylene gas was exhausted, and a polymer solution was added to an excessive amount of ethanol to induce precipitation. The precipitated polymer was washed with ethanol twice or three times, and dried in a vacuum oven of 90°C for 12 hours or more.

**[Table 1]**

| | Catalyst mixture | Catalyst mixture molar ratio |
|---|---|---|
| Example 1 | Preparation Example 1: Comparative Preparation Example 1 | 1:3 |
| Example 2 | Preparation Example 2: Comparative Preparation Example 1 | 1:3 |
| Example 3 | Preparation Example 3: Comparative Preparation Example 1 | 1:3 |
| Example 4 | Preparation Example 4: Comparative Preparation Example 1 | 1:3 |
| Example 5 | Preparation Example 5: Comparative Preparation Example 1 | 1:3 |
| Example 6 | Preparation Example 6: Comparative Preparation Example 1 | 1:4 |
| Example 7 | Preparation Example 7: Comparative Preparation Example 1 | 1:4 |
| Example 8 | Preparation Example 8: Comparative Preparation Example 1 | 1:4 |
| Example 9 | Preparation Example 9: Comparative Preparation Example 1 | 1:4 |
| Comparative Example 1 | Comparative Preparation Example 2: Comparative Preparation Example 1 | 1:3 |
| Comparative Example 2 | Comparative Preparation Example 2: Comparative Preparation Example 1 | 1:4 |

### <Analysis of Preparation Results of Ethylene/Alphaolefin Copolymers>

### Experimental Example 1

The physical properties of each of the copolymers prepared in the Examples and Comparative Examples were comparatively analyzed. Measurement conditions and methods are as follows.

### (1) Catalyst Activity (kgPE/mmol)

The polymer obtained was dried in vacuum, the yield was measured, and a value obtained by dividing a polymer (kg) by a catalyst (mmol) was calculated.

### (2) Melt Index

MI_{2.16} (Condition E, 190°C, 2.16 kg load) was measured according to ASTM D-1238.

### (3) Melting Temperature (Tm)

Melting temperature (Tm) can be obtained using a differential scanning calorimeter (DSC 6000) manufactured by PerkinElmer Co. Particularly, with respect to the copolymers, in a nitrogen atmosphere using DSC, the temperature was elevated to 150°C, maintained for 5 minutes, cooled to -100°C, and elevated again, while observing a DSC curve. In this case, the temperature elevation rate and cooling rate were 10°C/min each.

On the DSC curve measured, the melting temperature was set to the maximum point of an endothermic peak during the second temperature elevation.

**[Table 2]**

| | Activity (kgPE/mmol) | MI_{2.16} (g/10 min) | Tₘ (°C) |
|---|---|---|---|
| Example 1 | 10.2 | 3.20 | 118 |
| Example 2 | 11.5 | 5.11 | 118 |
| Example 3 | 12.7 | 3.15 | 120 |
| Example 4 | 12.2 | 3.06 | 121 |
| Example 5 | 14.1 | 2.99 | 117 |
| Example 6 | 12.5 | 4.41 | 116 |
| Example 7 | 9.3 | 1.62 | 116 |
| Example 8 | 13.9 | 4.54 | 117 |
| Example 9 | 14.1 | 3.46 | 118 |
| Comparative Example 1 | 9.6 | 3.89 | 88 |
| Comparative Example 2 | 9.0 | 4.33 | 91 |

As the results in Table 2, it was confirmed that an ethylene/alpha-olefin copolymer having excellent heat resistance was prepared through the exhibition of the higher T_{g} of ethylene/alpha-olefin copolymer in the Examples compared to Comparative Example 1.

This is an effect that is shown by using the transition metal compound represented by Formula 1, developed in the present invention as a catalyst.

## Claims

1. A transition metal compound represented by the following Formula 1: 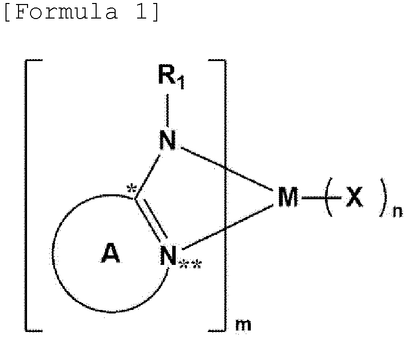 in Formula 1,
M is Ti, Zr or Hf,
R₁ is an alkyl group of 1 to 20 carbon atoms or a cycloalkyl group of 5 to 20 carbon atoms,
ring A is 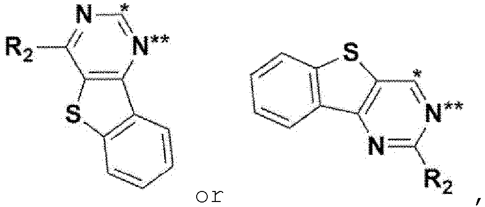 where R₂ is a substituted or unsubstituted aryl group of 6 to 30 carbon atoms or a substituted or unsubstituted heteroaryl group of 2 to 30 carbon atoms, and if R₂ is substituted, R₂ is substituted with an alkyl group of 1 to 20 carbon atoms or a cycloalkyl group of 5 to 20 carbon atoms,
m is 1 and n is 3, or m is 2 and n is 2, and
each X is independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms.

2. The transition metal compound according to claim 1, wherein
M is Hf,
R₁ is an alkyl group of 1 to 15 carbon atoms,
R₂ is a substituted or unsubstituted aryl group of 6 to 20 carbon atoms or a substituted or unsubstituted heteroaryl group of 2 to 20 carbon atoms, where if R₂ is substituted, R₂ is substituted with an alkyl group of 1 to 15 carbon atoms,
m is 1, and n is 3.

3. The transition metal compound according to claim 1, wherein
M is Hf,
R₁ is an alkyl group of 1 to 15 carbon atoms,
R₂ is a substituted or unsubstituted aryl group of 6 to 20 carbon atoms or a substituted or unsubstituted heteroaryl group of 2 to 20 carbon atoms, where if R₂ is substituted, R₂ is substituted with an alkyl group of 1 to 15 carbon atoms,
m is 2, and n is 2.

4. The transition metal compound according to claim 1, wherein the transition metal compound represented by Formula 1 is one selected from the group consisting of the following Formula 1-1 to Formula 1-4: 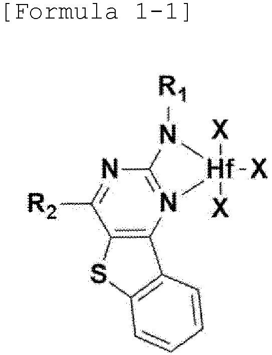 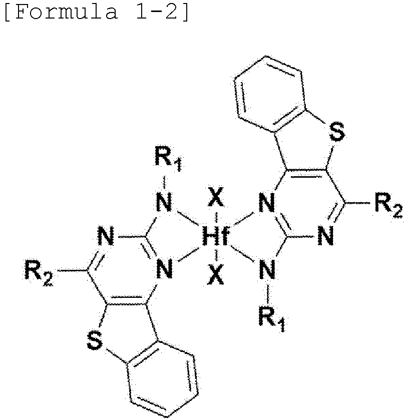 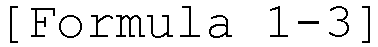 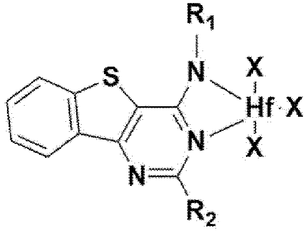 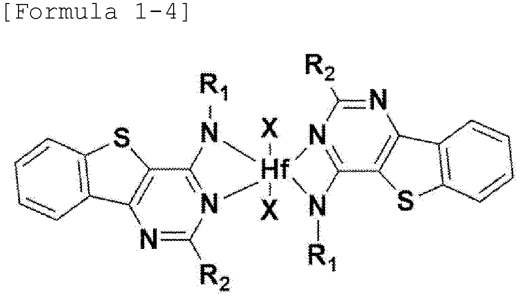 in Formula 1-1 to Formula 1-4,
R₁ is an alkyl group of 1 to 20 carbon atoms or a cycloalkyl group of 5 to 20 carbon atoms,
R₂ is a substituted or unsubstituted aryl group of 6 to 30 carbon atoms or a substituted or unsubstituted heteroaryl group of 2 to 30 carbon atoms, and if R₂ is substituted, R₂ is substituted with an alkyl group of 1 to 20 carbon atoms or a cycloalkyl group of 5 to 20 carbon atoms, and
each X is independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, or an arylalkyl group of 7 to 20 carbon atoms.

5. The transition metal compound according to claim 1, wherein the transition metal compound represented by Formula 1 is one selected from the group consisting of the following compounds:

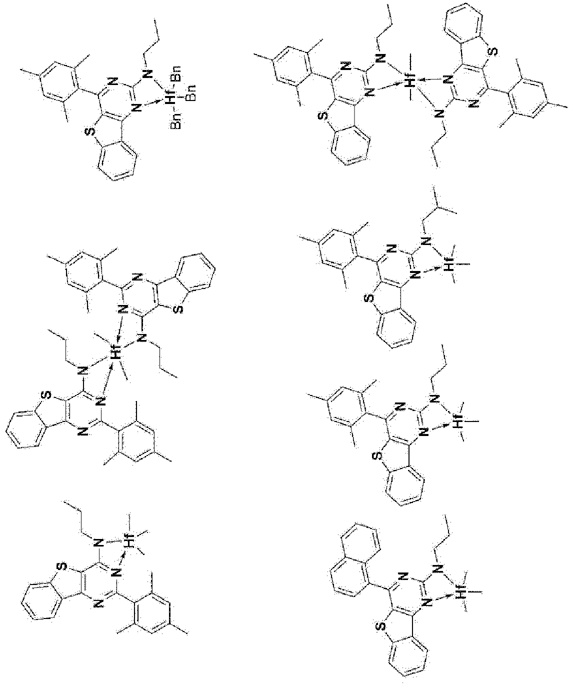

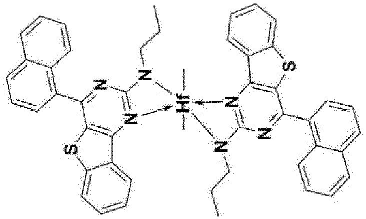

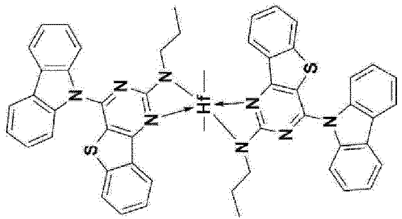

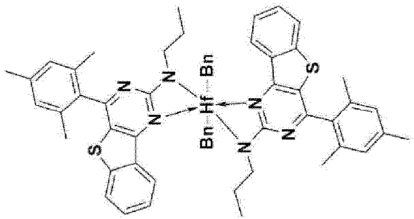

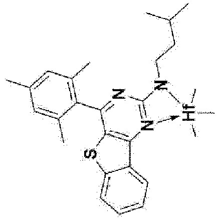

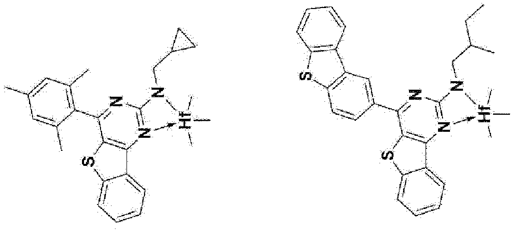

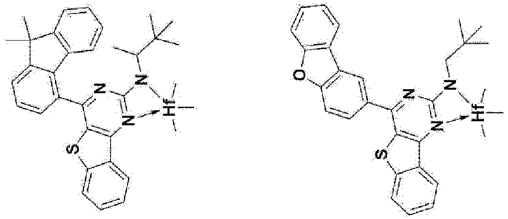

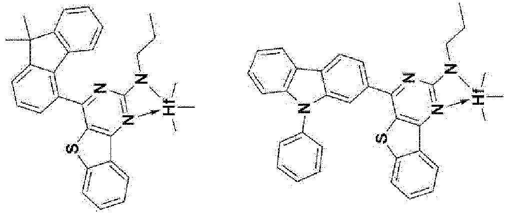

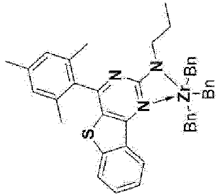

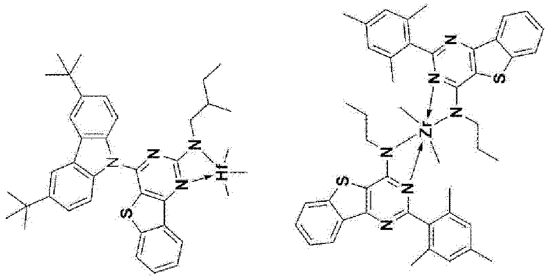

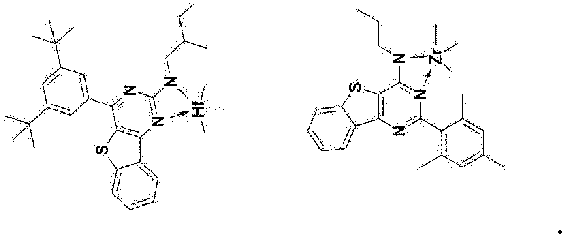

6. A catalyst composition comprising the transition metal compound of claim 1 and a cocatalyst.

7. The catalyst composition according to claim 6, wherein the catalyst composition further comprises a transition metal compound represented by the following Formula 2: 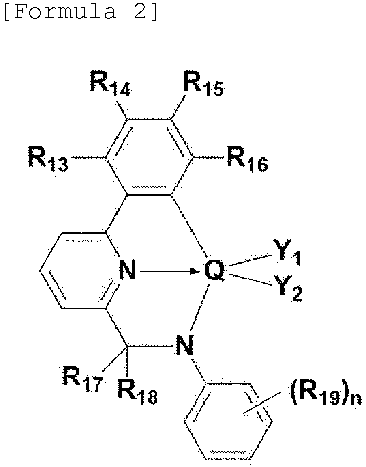 in Formula 2,
Q is Ti, Zr or Hf,
R₁₃ to R₁₆ are each independently hydrogen or an alkyl group of 1 to 20 carbon atoms, where adjacent two or more among them may be connected from each other to form rings,
R₁₇ and R₁₈ are each independently hydrogen or a substituted or unsubstituted aryl group of 6 to 20 carbon atoms, where the substitution is conducted with an alkyl group of 1 to 6 carbon atoms,
each R₁₉ is independently an alkyl group of 3 to 20 carbon atoms, a cycloalkyl group of 4 to 20 carbon atoms or an aryl group of 6 to 20 carbon atoms,
n is 1 to 5, and
Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

8. The catalyst composition according to claim 6, wherein the transition metal compound represented by Formula 2 is a compound represented by the following Formula 2A: 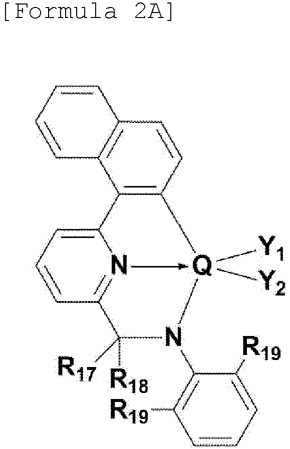 in Formula 2A,
Q is Ti, Zr or Hf,
R₁₇ and R₁₈ are each independently hydrogen or a substituted or unsubstituted aryl group of 6 to 20 carbon atoms, where the substitution is conducted with an alkyl group of 1 to 6 carbon atoms,
each R₁₉ is independently an alkyl group of 3 to 20 carbon atoms, a cycloalkyl group of 4 to 20 carbon atoms or an aryl group of 6 to 20 carbon atoms, and
Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

9. The catalyst composition according to claim 6, wherein the cocatalyst comprises one or more selected from the group consisting of the following Formula 3 to Formula 5:
[Formula 3] - [Al(Rₐ)-O]ₘ-
[Formula 4] D (Rₐ)₃
[Formula 5] [L-H]⁺[Z(A)₄]- or [L]⁺[Z(A)₄]⁻
in the above Formulas,
each Rₐ is independently a halogen radical, a hydrocarbyl radical of 1 to 20 carbon atoms, or a halogen-substituted hydrocarbyl radical of 1 to 20 carbon atoms,
m is an integer of 2 or more,
D is aluminum or boron,
L is a neutral or cationic Lewis acid,
Z is an element in group 13,
each A is independently aryl of 6 to 20 carbon atoms, in which one or more hydrogen atoms can be substituted with substituents, or alkyl of 1 to 20 carbon atoms, and
the substituent of A is halogen, hydrocarbyl of 1 to 20 carbon atoms, alkoxy of 1 to 20 carbon atoms, or aryloxy of 6 to 20 carbon atoms.

10. A method for preparing an olefin polymer, the method comprising a step of polymerizing an olefin monomer in the presence of the catalyst composition according to claims 6 to 9.

11. The method for preparing an olefin polymer according to claim 10, wherein the olefin polymer is an ethylene/alpha-olefin copolymer.
